**Europäisches Patentamt**

**European Patent Office**

**Office européen des brevets**

(19)

(11) Veröffentlichungsnummer : **0 074 563**
**B1**

(12) **EUROPÄISCHE PATENTSCHRIFT**

(45) Veröffentlichungstag der Patentschrift :
03.04.85

(21) Anmeldenummer : **82108030.6**

(22) Anmeldetag : **01.09.82**

(51) Int. Cl.⁴ : **C 09 C   1/40, C 09 C   1/22**

(54) **Halogenarme Zinkferrit-Pigmente, Verfahren zu ihrer Herstellung sowie ihre Verwendung.**

(30) Priorität : **12.09.81 DE 3136279**

(43) Veröffentlichungstag der Anmeldung :
**23.03.83 Patentblatt 83/12**

(45) Bekanntmachung des Hinweises auf die Patenterteilung : **03.04.85 Patentblatt 85/14**

(84) Benannte Vertragsstaaten :
**BE DE FR GB IT**

(56) Entgegenhaltungen :
**FR-A- 2 353 620**

(73) Patentinhaber : **BAYER AG
Konzernverwaltung RP Patentabteilung
D-5090 Leverkusen 1 Bayerwerk (DE)**

(72) Erfinder : **Hund, Franz, Dr.
Scheiblerstrasse 89
D-4150 Krefeld 1 (DE)**
Erfinder : **Hennings, Willi
Stettiner Strasse 84
D-4150 Krefeld 11 (DE)**
Erfinder : **Brunn, Horst, Dr.
Oderstrasse 55
D-4150 Krefeld 1 (DE)**
Erfinder : **Kresse, Peter, Dr.
Deswatinesstrasse 67
D-4150 Krefeld 1 (DE)**
Erfinder : **Rambold, Wolfgang, Dr.
Bethelstrasse 12
D-4150 Krefeld 1 (DE)**

## Beschreibung

Gegenstand der vorliegenden Erfindung sind halogenarme Zinkferritpigmente, die neben der farbgebenden Komponente $ZnFe_2O_4$ aus dem farblosen Komponentensystem $Al_2O_3$ und $P_2O_5$ bestehen, Verfahren zur Herstellung dieser Pigmente sowie ihre Verwendung.

Seit langer Zeit sind gelbe Zinkferrite bekannt. Sie sind zwar preiswert erhältlich, weisen aber verschiedene Nachteile auf. Sie sind einmal nicht besonders farbrein. Da ihre Herstellung durch Zusammenglühen von Zinkoxid und Eisenoxid bei Temperaturen von 750 bis 1 000 °C nur in Gegenwart von Chlorid-Katalysatoren ($ZnCl_2$, HCl) gelingt (US-Patent 2904 395), weisen die so gewonnenen Zinkferrite korrosionsfördernde Mengen an Halogeniden auf.

Ziel der vorliegenden Erfindung ist es daher, farbreine Zinkferrite zur Verfügung zu stellen, die in einfacher Weise herstellbar sind und darüber hinaus die genannten anwendungstechnischen Nachteile nicht aufweisen. Pigmente, die alle diese Anforderungen in hervorragender Weise erfüllen, sind Zinkferrite, bestehend zu 99,8 bis 90 Gew.-%, bevorzugt 99,5 bis 95 Gew.-%, bezogen auf das Pigment, aus $ZnFe_2O_4$ und zu 0,2 bis 10 Gew.-%, bevorzugt 0,5 bis 5 Gew.-%, bezogen auf das Pigment, aus dem Komponentensystem (1-x) $Al_2O_3$ und x $P_2O_5$, wobei x Werte zwischen größer als Null und kleiner als eins annehmen kann.

Diese Zinkferritpigmente weisen Halogengehalte von kleiner als 30 ppm auf.

Es wurde auch ein einfaches Verfahren gefunden zur Herstellung der erfindungsgemäßen Zinkferritpigmente durch Zusammenglühen von äquimolaren oder nahezu äquimolaren Mengen an Zinkoxid und Eisenoxid oder diese beim Glühen liefernden Ausgangsstoffe auf Temperaturen von etwa 750 bis etwa 1 000 °C in Sauerstoff-enthaltender Atmosphäre, vorzugsweise in Luft, das darin besteht, daß die Ausgangsstoffe in wässriger Suspension oder als Mischung der festen Komponenten nach intensiver Durchmischung mit feinteiligem Aluminiumoxid und/oder Aluminiumphosphaten und/oder Ammoniumphosphaten und/oder freier Phosphorsäure und/oder mit Aluminiumoxid und/oder Phosphat beim Glühen liefernden Komponenten in Mengen von 0,2 bis 10,0, vorzugsweise von 0,5 bis 5,0 Gew.% nach Filtration, Waschung, Sedimentation oder Eindampfung, normaler Trocknung oder Sprühtrocknung oder direkt als Festkörper nach intensiver Durchmischung an Luft oder an mit Sauerstoff an- oder abgereicherter Luft oder in reinem Sauerstoff ohne Verwendung von Halogenidkatalysatoren erhitzt, glüht, und das Calcinat normal oder langsam in derselben Atmosphäre oder in an Sauerstoff angereicherter Atmosphäre bis auf Temperaturen unter etwa 400-500 °C und dann beliebig bis auf Raumtemperatur abkühlt.

Eine besonders bevorzugte Ausführungsform des erfindungsgemäßen Verfahrens ist dadurch gekennzeichnet, daß die das Komponentensystem (1-x) $Al_2O_3$ und x $P_2O_5$ bildenden Verbindungen reinteiliges Aluminiumoxid und/oder Aluminiumphosphate und/oder Aluminiumoxid, Aluminiumphosphat beliebiger Zusammensetzung oder Phosphat beim Fällen, Trocknen und/oder Glühen liefernde Verbindungen sind.

Die unlöslichen Zusatzstoffe aus dem System (1-x) $Al_2O_3$ und x $P_2O_5$ können der wässrigen oder sonstigen Suspension oder den feinteiligen Feststoffen als Feststoff zugegeben werden aber auch durch Zugabe entsprechender Salz-, Base- oder Säurelösungen bei 0-100 °C, vorzugsweise 20-80 °C, ausgefällt werden, z. B. Ausfällung von Aluminiumhydroxiden, Aluminiumoxidhydroxiden oder Aluminiumphosphaten variabler Zusammensetzung durch Zugabe von Hydroxylionen, Meta-, Pyro-, Ortho- oder sonstiger Phosphationen oder ihrer freien Säuren zu Aluminiumionen oder diese liefernden Verbindungen.

Bei der Zugabe freier Phosphorsäuren oder löslicher Phosphate ist es häufig zweckmäßig, die Suspensionen bis zur Trockne einzudampfen, um keine Verluste an Phosphat zu haben.

Das getrocknete und gepulverte Filtergut oder die erwähnte Trockenpulvermischung oder der Eindampfungsrückstand wird an der Luft geglüht und anschließend abgekühlt und gegebenenfalls das Glühprodukt gemahlen. Ohne wesentliche Änderungen der optischen Eigenschaften der Pigmente kann die Glühung statt an Luft in an Sauerstoff schwach abgereicherter, insbesondere aber auch in an Sauerstoff angereicherter Luft bis in reinem Sauerstoff durchgeführt werden. Wie üblich besteht zwischen Glühdauer und Glühtemperatur eine reziproke Beziehung derart, daß bei erniedrigter Glühtemperatur im allgemeinen länger und bei erhöhter Glühtemperatur im allgemeinen kürzer geglüht werden muß.

Die erfindungsgemäßen in der Farbqualität wesentlich verbesserten Pigmente mit ihrer Verschiebung von braunorangegelben zu zitronengelberen Farbtönen, mit ihrer höheren Farbsättigung und ihrer höheren Helligkeit stellen eine Bereicherung der thermostabilen Gelbpigmente dar. Sie können verwendet werden zur Einfärbung von Baustoffen, von Lacken und Dispersionsfarben, zur Kunststoff- und zur Papiereinfärbung, zur Einfärbung von Keramiken und aufgrund ihres niedrigen Halogen-Gehaltes auch als Korrosionsschutzpigmente.

Gegenstand der vorliegenden Erfindung ist somit auch die Verwendung der erfindungsgemäßen Zinkferritpigmente zur Einfärbung organischer Bindemittel, organischer Kunststoffe, zur Einfärbung von Baustoffen, Papieren, Keramiken und zur Ausbildung von Korrosionsschutzanstrichen mit organischen und anorganischen Dispersionsmedien.

Nachfolgend wird die Erfindung beispielhaft erläutert.

### Beispiele

Die in Tabelle 1 aufgeführten Beispiele wurden wie folgt durchgeführt :

In einem 1/4 Mol-Ansatz werden 20,342 g ZnO oder diesem entsprechende Mengen an festem basischem Zinkkarbonat oder eine betrieblich hergestellte basische Zinkkarbonatsuspension mit 60,265 g $Fe_2O_3$ oder diesen entsprechenden Mengen an festem $\alpha$-FeOOH, festem $\gamma$-FeOOH, festem $Fe_3O_4$ oder betrieblich hergestellten $\alpha$-$Fe_2O_3$-Rot-, $\alpha$-FeOOH-Gelb-, $\gamma$-FeOOH-Orange- und/oder $Fe_3O_4$-Schwarzschlämmen mit wasser, je nach Viskosität der anfallenden Suspensionen bis auf ein Endvolumen von 600 ml eingestellt. Es ist auch möglich, feinteilige und reaktionsaktive Feststoffe der oben angeführten Komponenten zu mischen. Weiterhin kann man oben angeführten Mengen an ZnO und $Fe_2O_3$ entsprechende wässrige Lösungen an Zink- und Eisen (II)- und/oder Eisen (III)-salzen mit Alkali-, Ammonium-, Erdalkalihydroxid oder -carbonat versetzen und die ausgefallenen Hydroxide, basischen oder normalen Carbonate als Rohstoffe für die darzustellenden Zinkferritpigmente verwenden. Der flüssigen Suspensionen oder der Pulver-Luftdispersion wird in den 1-Versuchen kein Zusatzstoff, in den 2-Versuchen der in Tabelle 1 angegebene Zusatzstoff nach Art und Menge zugesetzt und in allen Fällen die flüssige oder feste Dispersion in einer Mischsirene bei 6 000 Upm 3 Minuten lang intensiv durchmischt. Danach wird die wässrige Suspension abgesaugt, wenn lösliche Salze zugegen sind mit Wasser salzfrei gewaschen und der Filterkuchen bei 105 °C getrocknet. Die in ihrer Zusammensetzung variierten Zusatzstoffe sind in Tabelle 1 angegeben nach als Prozentanteile vom Fertigpigment. Die Charakterisierung der festen oder flüssigen Zusatzstoffe in ihrer Art erfolgt durch die Angabe von (1-x) $Al_2O_3$ und x $P_2O_5$ mit $0 \leqslant x \leqslant 1$. So würden bedeuten : x = 0- die Zugabe von reinem $Al_2O_3$ oder dieses beim Glühen liefernden Verbindungen, x = 0,5- die Verbindung $AlPO_4$ oder diese beim Glühen liefernden Verbindungen, x = 0,75- die Verbindung $Al \cdot (PO_3)_3$ oder diese beim Glühen liefernden Verbindungen und x = 1- die reinem $P_2O_5$ entsprechende Mengen beliebiger Phosphorsäuren oder thermisch zersetzlicher Phosphate.

Das getrocknete und gepulverte Filtergut oder die erwähnte Trockenpulvermischung oder der Eindampfungsrückstand wird in Mengen von 5 g in einem Platin- oder Porzellantiegel bei den in den Einzelbeispielen angegebenen Temperaturen 10 Minuten lang in einem elektrisch beheizten Muffelofen an der Luft geglüht und anschließend in der angegebenen Art an der Luft abgekühlt und gegebenenfalls das Glühprodukt gemahlen.

Die farblichen Verbesserungen der erfindungsgemäß hergestellten Pigmente mit den erwähnten Zusätzen (2) gegenüber den ansonsten vollkommen gleich behandelten Nullversuchen ohne Zusätze (1) werden in mit den erhaltenen und gemahlenen Glühprodukten eingefärbten organischen Bindemittel enthaltenden Farbabzügen durch objektive Farbmessung quantitativ gemessen. Die Pigmentprüfung erfolgt in dem lufttrocknenden Bindemittel Alkydal® F 48 (Handelsprodukt der Bayer AG) mit einer Pigmentvolumenkonzentration von 10 %. Dazu werden aus der Anreibung von Pigment und Bindemittel auf einer Farbenausreibmaschine deckende Lackfilme hergestellt. Nach dem Trocknen erfolgt die Messung der Farbwerte nach DIN 53.236, Verfahren A und die Umrechnung der Meßwerte in die CIELAB, C 2 grad-Farbwerte nach DIN 6174. In Tabelle 1 sind für die Versuche ohne (1) und mit (2) Zusätzen mit dem Hunter-Lab. Colour Differenzmeter D 25 gemessen und umgerechneten Farbwerte $H_{grad}$, $C^*$, $L^*$ und die Differenzen $\Delta H_{grad}$, $\Delta C^*$ und $\Delta L^*$ aufgeführt. Die Differenzen ergeben sich jeweils dadurch, daß man von den Farbwerten der Proben mit Zusätzen (2) die ihnen entsprechende Werte der Proben ohne Zusätze (1) abzieht. Die positiven $\Delta$-Werte der Proben mit Zusätzen gegenüber den Proben ohne Zusätze bedeuten bei positivem $\Delta H_{grad}$ eine erwünschte Farbenverschiebung von einem braunorangen wenig hellen nach einem grünstichigen zitronenfarbigen hellen Gelb, bei positivem $\Delta C^*$, eine immer erwünschte Zunahme der Farbsättigung und damit Zunahme der Farbreinheit und bei positivem $\Delta L^*$ eine erwünschte Zunahme der Helligkeit des Farbabzugs, was bedeutet, daß man zur Erzielung eines gleichhellen Abzugs weniger Zusatz an aufhellendem, teurem Titandioxidpigment benötigt.

Ein Vergleich der Durchgeführten Versuche zeigt nun, daß in allen Fällen bei der Zufügung von (1-x) $Al_2O_3$ und x $P_2O_5$ Verbesserungen der Farbwerte auftreten. Dies wird hier dokumentiert durch positive Werte von $\Delta H_{grad}$, $\Delta C^*$ und $\Delta L^*$ der Versuche mit Zusätzen (2) gegenüber den sonst vollkommen gleich behandelten Versuchen ohne Zusätze (1), sogenannten Nullversuchen.

Legende zu Tabelle 1 :

F = Feststoff ; S = Schlamm ; E = Eindampfen der Suspension ; Fg = Fällung ; N.F. = Nachfällung.

1. basischer Zinkkarbonatschlamm.
2. $\alpha$-$Fe_2O_3$, feinteiliges, gefälltes, rotes Eisen (III)-oxid (DOS 2.249.274).
3. $\alpha$-FeOOH, feinteiliges, gefälltes gelbes Eisen (III)-oxid-hydroxid (USP 1.368.748 oder DOS 2.556.406) Luftoxidationsverfahren.
4. « Zinkoxid® aktiv », Handelsprodukt der Bayer AG.
5. $\alpha$-FeOOH, feinteiliges, gelbes Eisen (III)-oxidhydroxid aus der Reduktion aromatischer Nitroverbindungen durch Eisen in Gegenwart von Aluminiumsalzen (DRP 515.758).
6. $\gamma$-FeOOH, feinteiliges, gelboranges Eisen (III)-oxydhydroxid (DAS 1.219.009).

7. $Fe_3O_4$, feinteiliges, schwarzes Eisen (II)-Eisen (III)-oxid aus der Reduktion aromatischer Nitroverbindungen durch Eisen in Gegenwart konzentrierter Eisen (II)-salze ; DRP 463.773 oder Fällungsschwarz (DOS 2.618.058 und 2.518.283).

8. ZnO-« Grünsiegel® », 99,9 %, Handelsprodukt der Grillo AG.

I = Normale Abkühlung an Luft.

II = 10 Minuten in $O_2$ bei 600 °C + weiter Luft normal abgekühlt.

III = 5 Minuten 800 °C (Luft) + 10 Minuten 700 °C (Luft) + 20 Minuten 600 °C (Luft) + 20 Minuten bis 480 °C (Luft), weiter normal abgekühlt.

IV = 5 Minuten 800 °C (Luft) + 10 Minuten 700 °C (Luft) + 10 Minuten 600 °C (Luft) + 20 Minuten bis 480 °C (Luft) + weiter normal abgekühlt.

V = 5 Minuten 800 °C (Luft) + 20 Minuten 700 °C (Luft) + 10 Minuten 600 °C (Luft) + 30 Minuten bis 450 °C (Luft) + weiter normal abgekühlt.

(Siehe Tabellen, Seite 5 ff.)

4

Tabelle 1

Herstellungsbedingungen und Farbwerte der Zinkferritpigmente

| Vers. Nr. | Eingesetzte Komponenten | | Zusatz $(1-x)Al_2O_3+xP_2O_5$ | | Glü-hung | Abküh-lung | absolute Farbwerte | | | Farbabstand gegen Null-versuch | | | Halogen-Gehalt |
|---|---|---|---|---|---|---|---|---|---|---|---|---|---|
| | ZnO | Fe$_2$O$_3$ | x | % | °C | | H$_{grad}$ | C* | L* | $\Delta$H$_{grad}$ | $\Delta$C* | $\Delta$L* | $/$ppm$/$ |
| 1.1 | ZnCO$_3$$/$S,$^{1)}$$/$ | $\gamma$-Fe$_2$O$_3$$/$F,$^{2)}$$/$ | ohne | – | 825 | IV | 54,6 | 36,2 | 44,7 | – | – | – | |
| 1.2 | " | " | x=0,50$/$F$/$ | 2 | " | " | 58,2 | 38,5 | 46,9 | +3,6 | +2,3 | +2,2 | |
| 2.1 | ZnCO$_3$$/$S,$^{1)}$$/$ | $\alpha$-FeOOH$/$F,$^{3)}$$/$ | ohne | – | 900 | II | 59,5 | 40,3 | 49,4 | – | – | – | |
| 2.2 | " | " | x=0,50$/$F$/$ | 2 | " | " | 62,2 | 41,9 | 51,5 | +2,7 | +1,6 | +2,1 | |
| 3.1 | ZnCO$/$S,$^{1)}$$/$ | $\alpha$-FeOOH$/$S,$^{3)}$$/$ | ohne | – | 875 | IV | 62,1 | 42,7 | 51,6 | – | – | – | |
| 3.2 | " | " | x=0,50$/$F$/$ | 1 | " | " | 63,2 | 43,1 | 52,7 | +1,1 | +0,4 | +1,1 | – |
| 4.1 | ZnCO$_3$$/$S,$^{1)}$$/$ | $\alpha$-FeOOH/S,$^{3)}$$/$ | ohne | – | 925 | V | 60,8 | 41,3 | 50,3 | – | – | – | |
| 4.2 | " | " | x=0,50$/$F$/$ | 2 | " | " | 63,8 | 43,8 | 52,9 | +3,0 | +2,5 | +2,6 | |
| 5.1 | ZnCO$_3$$/$F,$^{4)}$$/$ | $\alpha$-FeOOH$/$S,$^{3)}$$/$ | ohne | – | 900 | IV | 57,7 | 37,8 | 48,1 | – | – | – | |
| 5.2 | " | " | x=0,50$/$F$/$ | 2 | " | " | 62,9 | 42,7 | 51,7 | +5,2 | +4,9 | +3,6 | 20 |
| 6.1 | ZnCO$_3$$/$S,$^{1)}$$/$ | $\alpha$-FeOOH$/$S,$^{3)}$$/$ | ohne | – | 850 | III | 60,6 | 41,5 | 50,8 | – | – | – | |
| 6.2 | " | " | x=0,50$/$N.F$/$ | 1 | " | " | 61,4 | 42,2 | 51,9 | +0,8 | +0,7 | +1,1 | |
| 7.1 | ZnCO$_3$$/$F,$^{4)}$$/$ | $\alpha$-FeOOH$/$F,$^{3)}$$/$ | ohne | – | 875 | IV | 58,2 | 37,7 | 48,1 | – | – | – | |
| 7.2 | " | " | x=0,50$/$F$/$ | 5 | " | " | 60,6 | 40,3 | 50,5 | +2,4 | +2,6 | +2,4 | |
| 8.1 | ZnCO$_3$$/$F,$^{4)}$$/$ | $\alpha$-FeOOH$/$F,$^{3)}$$/$ | ohne | – | 875 | IV | 58,1 | 37,7 | 48,1 | – | – | – | |
| 8.2 | " | " | x=0,50$/$F$/$ | 10 | " | " | 58,2 | 39,6 | 49,6 | +0,1 | +1,9 | +1,5 | |

0074563

(Fortsetzung)

Tabelle 1

Herstellungsbedingungen und Farbwerte der Zinkferritpigmente

| Vers. Nr. | Eingesetzte Komponenten | | Zusatz $(1-x)Al_2O_3+xP_2O_5$ | | Glü-hung | Abküh-lung | absolute Farbwerte | | | Farbabstand gegen Null- | | | Halogen-Gehalt /ppm/. |
|---|---|---|---|---|---|---|---|---|---|---|---|---|---|
| | ZnO | Fe$_2$O$_3$ | x | % | °C | | $H_{grad}$ | C* | L* | $\Delta H_{grad}$ | $\Delta$C* | $\Delta$L* | |
| 9.1 | ZnCO$_3$/S,$^{1)}$/ | /-FeeOOH/S,$^{5)}$/ | ohne | – | 900 | IV | 58,6 | 38,1 | 48,1 | – | – | – | |
| 9.2 | " | " | x=0,50/F/ | 2 | " | " | 64,5 | 43,1 | 52,3 | +5,9 | +5,0 | +4,2 | 10 |
| 10.1 | ZnCO$_3$/S,$^{1)}$/ | /-FeOOH/S,$^{5)}$/ | ohne | – | 850 | I | 58,7 | 36,7 | 47,8 | – | – | – | |
| 10.2 | " | " | x=0,50/F/ | 2 | " | " | 62,8 | 39,4 | 50,3 | +4,1 | +2,7 | +2,5 | |
| 11.1 | ZnCO$_3$/S,$^{1)}$/ | /-FeOOH/S,$^{5)}$/ | ohne | – | 900 | IV | 58,6 | 38,1 | 48,1 | – | – | – | |
| 11.2 | " | " | x=0,75/F/ | 2 | " | " | 63,4 | 42,1 | 51,6 | +4,8 | +4,0 | +3,5 | – |
| 12.1 | ZnCO$_3$/F,$^{4)}$/ | /-FeOOH/F,$^{6)}$/ | ohne | – | 875 | IV | 57,8 | 37,8 | 46,6 | – | – | – | |
| 12.2 | " | " | x=0,50/F/ | 2 | " | " | 59,8 | 39,7 | 48,0 | +2,0 | +1,9 | +1,4 | |
| 13.1 | ZnCO$_3$/S,$^{1)}$/ | Fe$_3$O$_4$/S,$^{7)}$/ | ohne | – | 900 | III | 60,2 | 36,4 | 46,7 | – | – | – | |
| 13.2 | " | " | x=0,50/F/ | 1 | " | " | 62,3 | 36,5 | 47,5 | +2,1 | +0,1 | +0,8 | |
| 14.1 | ZnO/F,$^{8)}$/ | /-FeOOH/S,$^{3)}$/ | ohne | – | 925 | V | 62,9 | 43,7 | 52,1 | – | – | – | |
| 14.2 | " | " | x=0,5/F/ | 2 | " | " | 65,2 | 45,2 | 53,7 | +2,3 | +1,5 | +1,6 | <10 |
| 15.1 | ZnSO$_4$/Na$_2$CO$_3$ /Fg/ | FeSO$_4$/Na$_2$CO$_3$ | ohne | – | 875 | IV | 51,6 | 24,7 | 39,7 | – | – | – | |
| 15.2 | " | " | x=0,5/F/ | 2 | " | " | 54,2 | 26,9 | 42,1 | +2,6 | +2,2 | +2,4 | |

(Fortsetzung)

Tabelle 1

Herstellungsbedingungen und Farbwerte der Zinkferritpigmente

| Vers. Nr. | Eingesetzte Komponenten | | Zusatz $(1-x)Al_2O_3+xP_2O_5$ | | Glühung | Abkühlung | absolute Farbwerte | | | Farbabstand gegen Null- | | | Halogen-Gehalt [ppm] |
|---|---|---|---|---|---|---|---|---|---|---|---|---|---|
| | ZnO | $Fe_2O_3$ | x | % | °C | | $H_{grad}$ | C* | L* | $\Delta H_{grad}$ | $\Delta C*$ | $\Delta L*$ | |
| 16.1 | $ZnCO_3 [S,^{1)}]$ | $\alpha\text{-FeOOH} [S,^{3)}]$ | ohne | – | 875 | IV | 57,5 | 38,0 | 47,9 | – | – | – | |
| | " | " | x=0,33 [E] | 2 | " | " | 63,3 | 43,3 | 52,1 | +5,8 | +5,3 | +4,2 | |
| 17.1 | $ZnCO_3 [S,^{1)}]$ | $\alpha\text{-FeOOH} [S,^{3)}]$ | ohne | – | 875 | IV | 57,5 | 38,0 | 47,9 | – | – | – | |
| 17.2 | " | " | x=0,50 [E] | 2 | " | " | 63,1 | 43,3 | 52,1 | +5,6 | +5,3 | +4,2 | 10 |
| 18.1 | $ZnCO_3 [S,^{1)}]$ | $\alpha\text{-FeOOH} [S,^{3)}]$ | ohne | – | 875 | IV | 57,5 | 38,0 | 47,9 | – | – | – | |
| 18.2 | " | " | x=0,75 [E] | 2 | " | " | 62,3 | 42,4 | 51,3 | +4,8 | +4,4 | +3,4 | |
| 19.1 | $ZnCO_3 [S,^{1)}]$ | $\alpha\text{-FeOOH} [S,^{3)}]$ | ohne | – | 875 | IV | 57,5 | 38,0 | 47,9 | – | – | – | |
| 19.2 | " | " | x=0,83 [E] | 2 | " | " | 60,1 | 42,2 | 50,7 | +2,6 | +4,2 | +2,8 | |
| 20.1 | $ZnCO_3 [S,^{1)}]$ | $\alpha\text{-FeOOH} [S,^{3)}]$ | ohne | – | 875 | IV | 57,5 | 38,0 | 47,9 | – | – | – | |
| 20.2 | " | " | x=0,95 [E] | 2 | " | " | 59,8 | 42,0 | 50,7 | +2,3 | +4,0 | +2,8 | |

0 074 563

**0 074 563**

### Ansprüche

1. Zinkferritpigmente, bestehend zu 99,8 bis 90 Gew.-%, bevorzugt 99,5 bis 95 Gew.-%, bezogen auf das Pigment, aus $ZnFe_2O_4$ und zu 0,2 bis 10 Gew.-%, bevorzugt 0,5 bis 5 Gew.-%, bezogen auf das Pigment, aus dem Komponentensystem (1-x) $Al_2O_3$ und x $P_2O_5$, wobei x Werte zwischen größer als Null und kleiner als eins annehmen können.

2. Verfahren zur Herstellung der Zinkferritpigmente gemäß Anspruch 1 durch Zusammenglühen einer Mischung von äquimolaren oder nahezu äquimolaren Mengen an Zinkoxid und Eisenoxid oder diese beim Glühen liefernder Ausgangsstoffe auf Temperaturen von etwa 750 bis etwa 1 000 °C in Sauerstoff-enthaltender Atmosphäre, vorzugsweise an Luft, dadurch gekennzeichnet, daß man vor dem Glühen der Mischung 0,2 bis 10 Gew.-%, bevorzugt 0,5 bis 5 Gew.-%, bezogen auf das Pigment, das Komponentensystem (1-x) $Al_2O_3$ und x $P_2O_5$ bildende Verbindungen hinzufügt.

3. Verfahren gemäß Anspruch 2, dadurch gekennzeichnet, daß nach dem Glühen in der Sauerstoffenthaltenden Atmosphäre langsam in derselben Atmosphäre auf Temperatur zwischen 400-500 °C und von da an beliebig auf Raumtemperatur abgekühlt wird.

4. Verfahren gemäß einem der Ansprüche 1 oder 2, dadurch gekennzeichnet, daß die das Komponentensystem (1-x) $Al_2O_3$ und x $P_2O_5$ bildenden Verbindungen feinteiliges Aluminiumoxid und/oder Aluminiumphosphate und/oder Aluminiumoxid, Aluminiumphosphate beliebiger Zusammensetzung oder Phosphat beim Fällen, Trocknen und/oder Glühen liefernde Verbindungen sind.

5. Verfahren gemäß einem der Ansprüche 2 bis 4, dadurch gekennzeichnet, daß die das Komponentensystem (1-x) $Al_2O_3$ und x $P_2O_5$ bildenden Komponenten der Mischung in wäßriger Suspension oder als Mischung der festen Komponenten nach intensiver Durchmischung zugegeben werden.

6. Verwendung der Zinkferritpigmente gemäß einem der Ansprüche 1 bis 5 zur Einfärbung organischer Bindemittel, organischer Kunststoffe, zur Einfärbung von Baustoffen, Papieren, Keramiken und zur Ausbildung von Korrosionsschutzanstrichen mit organischen und anorganischen Dispersionsmedien.

### Claims

1. Zinc ferrite pigments, consisting of 99.8 to 90 % by weight, preferably 99.5 to 95 % by weight, based on the pigment, of $ZnFe_2O_4$ and 0.2 to 10 % by weight, preferably 0.5 to 5 % by weight, based on the pigment, of the component system (1-x) $Al_2O_3$ and x $P_2O_5$, it being possible for the x's to have values between greater than zero and smaller than one.

2. Process for the production of the zinc ferrite pigments according to Claim 1 by calcining together a mixture of equimolar or almost equimolar quantities of zinc oxide and iron oxide or starting substances which yield these on calcination, to temperatures of about 750 to about 1 000 °C in an oxygen-containing atmosphere, preferably air, characterised in that, prior to calcining the mixture, 0.2 to 10 % by weight, preferably 0.5 to 5 % by weight, based on the pigment, of compounds forming the component system (1-x) $Al_2O_3$ and x $P_2O_5$ are added.

3. Process according to Claim 2, characterised in that after calcining the mixture in the oxygen-containing atmosphere the product is cooled slowly, in the same atmosphere, to a temperature between 400-500 °C and from then on to room temperature in any desired manner.

4. Process according to one of Claims 1 or 2, characterised in that the compounds forming the component system (1-x) $Al_2O_3$ and x $P_2O_5$ are finely-divided aluminium oxide and/or aluminium phosphates and/or compounds which yield aluminium oxide, aluminium phosphate of any composition or phosphate on precipitation, drying and/or calcination.

5. Process according to one of Claims 2 to 4, characterised in that the components forming the component system (1-x) $Al_2O_3$ and x $P_2O_5$ are added to the mixture in aqueous suspension or in the form of a mixture of the solid components after intensive mixing.

6. Use of the zinc ferrite pigments according to one of Claims 1 to 5 for colouring organic binders or organic plastics, for colouring building materials, papers or ceramics or for forming anti-corrosion paints with organic and inorganic dispersion media.

### Revendications

1. Pigments de ferrites de zinc consistant en 99,8 à 90 % en poids, de préférence 99,5 à 95 % en poids, par rapport au pigment, de $ZnFe_2O_4$ et pour 0,2 à 10 % en poids, de préférence 0,5 à 5 % en poids, par rapport au pigment, en le système de composants (1-x) $Al_2O_3$ et x $P_2O_5$, x pouvant prendre des valeurs supérieures à 0 et inférieures à 1.

2. Procédé de préparation des pigments de ferrites de zinc selon la revendication 1 par calcination en commun d'un mélange de quantités équimoléculaires ou à peu près équimoléculaires d'oxyde de zinc et d'oxyde de fer ou de matières premières donnant ces oxydes à la calcination, à des températures d'environ 750 à 1 000 °C, en atmosphère contenant de l'oxygène, de préférence à l'air, caractérisé en ce que, avant la calcination, on ajoute au mélange de 0,2 à 10 % en poids, de préférence 0,5 à 5 % en poids, par rapport au pigment, de composés donnant le système de composants (1-x) $Al_2O_3$ et x $P_2O_5$.

3. Procédé selon la revendication 2, caractérisé en ce que, après la calcination en atmosphère contenant de l'oxygène, on refroidit lentement dans la même atmosphère jusqu'à des températures de 400 à 500 °C après quoi on refroidit à volonté à température ambiante.

4. Procédé selon l'une des revendications 1 ou 2, caractérisé en ce que les composés formant le système de composants (1-x) $Al_2O_3$ et x $P_2O_5$ sont de l'alumine en fines particules et/ou des phosphates d'aluminium et/ou des composés donnant à l'alumine, un phosphate d'aluminium de composition quelconque ou un phosphate à la précipitation, au séchage et/ou à la calcination.

5. Procédé selon l'une des revendications 2 à 4, caractérisé en ce que les composants formant le système de composants (1-x) $Al_2O_3$ et x $P_2O_5$ sont ajoutés au mélange en suspension aqueuse ou à l'état de mélange des composants solides après mélange intensif.

6. Utilisation des pigments de ferrites de zinc selon l'une des revendications 1 à 5 pour la coloration de liants organiques, de résines synthétiques organiques, pour la coloration de matériaux de construction, de papiers, de céramiques et pour l'application de revêtements anticorrosion avec des milieux de dispersion organiques et minéraux.